(19) Europäisches Patentamt
European Patent Office
Office européen des brevets

(11) Veröffentlichungsnummer: **0 391 121 B1**

(12) **EUROPÄISCHE PATENTSCHRIFT**

(45) Veröffentlichungstag der Patentschrift: **23.11.94**

(51) Int. Cl.⁵: **C09B 29/085**, C09B 67/22, D06P 1/18

(21) Anmeldenummer: **90105141.7**

(22) Anmeldetag: **19.03.90**

Die Akte enthält technische Angaben, die nach dem Eingang der Anmeldung eingereicht wurden und die nicht in dieser Patentschrift enthalten sind.

# (54) Monoazofarbstoffe, ihre Herstellung und Verwendung.

(30) Priorität: **06.04.89 DE 3911120**

(43) Veröffentlichungstag der Anmeldung:
**10.10.90 Patentblatt 90/41**

(45) Bekanntmachung des Hinweises auf die Patenterteilung:
**23.11.94 Patentblatt 94/47**

(84) Benannte Vertragsstaaten:
**CH DE FR GB IT LI**

(56) Entgegenhaltungen:
**EP-A- 0 043 795**
**DE-A- 2 254 017**

(73) Patentinhaber: **CASSELLA Aktiengesellschaft**
**Hanauer Landstrasse 526**
**D-60386 Frankfurt (DE)**

(72) Erfinder: **Bühler, Ulrich, Dr.**
**Kastanienweg 8**
**D-8755 Alzenau (DE)**
Erfinder: **Boos, Margareta**
**Am See 6**
**D-6234 Hattersheim (DE)**
Erfinder: **Kühn, Reinhard**
**Heinrich-Bleicher-Strasse 39**
**D-6000 Frankfurt am Main 50 (DE)**

(74) Vertreter: **Muley, Ralf, Dr.**
**Cassella AG,**
**Patentabteilung,**
**Hanauer Landstrasse 526**
**D-60386 Frankfurt (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.09/3.3.3)

## Beschreibung

Die Vorliegende Erfindung betrifft wertvolle neue, von ionogenen Gruppen freie Azofarbstoffe der allgemeinen Formel I

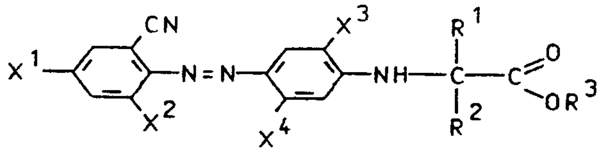

(I)

in der

$X^1$ Wasserstoff; ($C_1$ bis $C_6$)Alkyl; Cyclopentyl; Cyclohexyl; Fluor; Chlor; Brom; Trifluormethyl; ($C_1$ bis $C_4$)-Alkoxy, das durch ($C_1$ bis $C_4$)Alkoxy und/oder Hydroxy substituiert sein kann,

$X^2$ Cyan;

$X^3$ Wasserstoff;

$X^4$ $NHCOR^4$;

$R^1$ Wasserstoff; ($C_1$ bis $C_6$)Alkyl;

$R^2$ ($C_1$ bis $C_6$)Alkyl;

$R^3$ ($C_1$ bis $C_8$)Alkyl; ($C_1$ bis $C_8$)Alkyl, das ein- oder mehrfach durch Sauerstoffatome unterbrochen sein kann und/oder ein- oder mehrfach mit Chlor, Brom, Cyan, Hydroxy, Phenyl, Phenoxy, ($C_1$ bis $C_8$)Alkoxy, ($C_3$ bis $C_5$)Alkenyloxy, Cyclopentyloxy, Cyclohexyloxy, Tetrahydrofurfuryl, Tetrahydrofurfuryloxy, ($C_1$-$C_4$)Alkyl-tetrahydrofurfuryl, Tetrahydropyronyl, ($C_1$ bis $C_4$)Alkyl-tetrahydropyronyl, ($C_1$ bis $C_4$)Alkoxy-carbonyl, ($C_1$ bis $C_4$)Alkoxy-carbonyloxy, ($C_1$ bis $C_4$)Alkyl-carbonyloxy, ($C_3$ bis $C_5$)Alkenyloxy-carbonyl, ($C_3$ bis $C_5$)-Alkenyloxy-carbonyloxy, Cyclopentyloxy-carbonyl, Cyclohexyloxy-carbonyl, Phenoxy-carbonyl, Phenoxy-carbonyloxy und/oder Phenyl-carbonyloxy substituiert ist, wobei das Phenoxy-carbonyl oder das Phenoxy-carbonyloxy oder das Phenyl-carbonyloxy seinerseits ein- oder mehrfach mit ($C_1$ bis $C_4$)Alkyl, Chlor, Brom und/oder Cyan substituiert sein kann; ($C_3$ bis $C_5$)Alkenyl; Cyclopentyl; Cyclohexyl; Tetrahydrofurfuryl; Benzyl; Benzyl, das mit Chlor, Brom, Nitro, Cyan, ($C_1$ bis $C_4$)Alkyl und/oder ($C_1$ bis $C_4$)Alkoxy ein- oder mehrfach substituiert ist; Phenyl; ($C_5$ bis $C_{16}$)Alkyl, das durch 2 oder 3 Sauerstoffatome unterbrochen ist;

$R^4$ ($C_1$ bis $C_8$)Alkyl, das mit Fluor, Chlor, Brom, Hydroxy, ($C_1$ bis $C_4$)Alkoxy ein-oder mehrfach substituiert sein kann; Phenyl; ($C_1$ bis $C_4$)Alkoxy; Phenoxy;

bedeuten.

Die Erfindung betrifft auch Mischungen von Farbstoffen der allgemeinen Formel I sowie die Herstellung dieser Farbstoffe und ihrer Mischungen und ihre Verwendung zum Färben von hydrophoben Fasermaterialien.

Alkyl-, Alkoxy-, Alkenyloxy- und Alkenylreste können geradkettig oder verzweigt sein. Dies gilt auch, wenn sie substituiert sind und/oder als Substituenten anderer Reste oder in Verbindung mit anderen Resten, wie z.B. als Alkoxycarbonyloxy oder Alkenyloxycarbonyloxy auftreten.

Bei Substitutionen sind Einfachsubstitutionen bevorzugt. Bei einer Mehrfachsubstitution ist eine Zweifachsubstitution bevorzugt.

Reste die für $R^3$ stehen können, sind beispielsweise 2-Chlor-ethyl, 2-Brom-ethyl, 2-Cyan-ethyl, 2-Phenethyl, 3-Chlor-, 3-Brom-, 3-Phenyl-propyl, 2-Hydroxy- oder 2-Phenoxy-ethyl, 2- oder 3-Hydroxy-propyl, 2- oder 3-Hydroxy-butyl, 2- oder 3-Phenoxy-propyl, 2- oder 3-Phenoxy-butyl, 2,3-Dihydroxy-propyl oder -butyl, 3-Chlor-2-hydroxy-propyl, 2-Acetoxy-ethyl, 4-Acetoxy-butyl, 2-Propionyloxy-ethyl, 2-Butyryloxy-ethyl, 4-Butyryloxy-butyl, 2-Methoxycarbonyl-ethyl, 3-Methoxycarbonyl-ethyl, 3-Propoxycarbonyl-propyl, 3-i-Propoxycarbonyl-propyl, 4-Butoxy-butyl, 2-Phenylcarbonyloxy-ethyl, 5-Phenylcarbonyloxy-pentyl, 2-Phenoxycarbonyloxy-ethyl, 3-Phenoxycarbonyloxy-propyl, 2-Allyloxycarbonyloxy-ethyl, 3-Methallyloxycarbonyloxy-propyl, 4-Propenyloxycarbonyloxy-butyl, 2-(1-, 2- oder 3-Butenyl)-oxycarbonyloxy-ethyl, 2-Methoxycarbonyloxy-ethyl, 3-i-Propoxycarbonyloxy-propyl, 4-Butoxy-carbonyloxy-butyl, 2-(2- oder 3-Tetrahydrofurfuryl)-ethyl, 2-(3-Ethyl-tetrahydrofurfur-2-yl)-ethyl, 2-(Tetrahydro-4-pyron-2- oder 3-yl)-ethyl, 3-(2-Ethyl-tetrahydro-4-pyron-3-yl)-propyl, 2-Methoxy-ethyl, 3-Methoxy-propyl, 3-Methoxy-2-methyl-propyl, 2-Ethoxy-ethyl, 3-i-Propoxy-propyl, 4-i-Butoxy-2-methyl-propyl, Allyl, Methallyl, Propenyl, Crotyl(=2-Butenyl), 1- oder 3-Butenyl, 2-Allyloxy-ethyl, 3-Methallyloxy-propyl, 2-Allyloxycarbonyl-ethyl, 4-Methallyloxycarbonyl-butyl, 2-Hydroxy-3-methoxy-propyl, 2-Hydroxy-3-ethoxy-propyl, 2-Hydroxy-3-i-propoxy-propyl, 2-Hydroxy-3-propoxy-propyl, 2-Hydroxy-3-butoxy-propyl, 2-Hydroxy-3-phenoxy-propyl, 2-Acetoxy-3-methoxy-propyl, 2-Acetoxy-3-ethoxy-propyl, 2-Acetoxy-3-propoxy-propyl, 2-Acetoxy-3-butoxy-propyl, 2-Acetoxy-3-phenoxy-propyl, 2-Ethoxy-ethyl, Benzyl, 4-Chlor-, 4-Brom-, 4-Nitro-, 4-Cyan-, 4-Methyl- oder 4-Methoxy-benzyl, 2-, 3- oder 4-Ethoxybenzyl, 2,3-Dichlorbenzyl, $-CH_2CH_2OCH_2CH_2OC_2H_5$; $-CH_2CH_2OCH_2CH_2OCH_2CH_2OC_2H_5$; $-CH_2CH_2OCH_2CH_2OCH_3$; $-(CH_2CH_2O)_3-CH_3$; $-(CH_2CH_2O)_3$-n-$C_3H_7$;$-(CH_2CH_2O)_3$-i-$C_3H_7$; $-(CH_2CH_2O)_2$-n$C_4H_9$;$-(CH_2)_3O-(CH_2CH_2O)_2-CH_3$; $-(CH_2CH_2O)_2-C_6H_5$; $-CH_2CH_2O$-n-$C_4H_9$; $-(CH_2CH_2O)_2-CO-CH_3$.

Beispiele für Alkylgruppen mit 1 bis zu 8 C-Atomen in den Resten $X^1$, $R^1$, $R^2$, $R^3$, $R^4$ sind: Methyl, Ethyl, n-Propyl, i-Propyl, n-Butyl, i-Butyl, sek.Butyl, tert.Butyl, n-Pentyl, i-Pentyl, n-Hexyl, i-Hexyl, 2,3-Dimethylbutyl, n-Heptyl, i-Heptyl, n-Octyl, i-Octyl, 3-Methylheptyl, 2-Methylbutyl, 2-Ethylbutyl, 2-Methylpentyl, 3-Methylpentyl, 2-Ethylhexyl.

Beispiele für Alkoxygruppen in den Resten $X^1$, $R^4$ sind: Methoxy, Ethoxy, n-Propoxy, i-Propoxy, n-Butoxy, i-Butoxy, sek.Butoxy, tert.Butoxy, n-Pentoxy, i-Pentoxy, 2-Methylbutoxy, n-Hexoxy, i-Hexoxy, 2,3-Dimethylbutoxy, 2-Ethylbutoxy, 2-Methylpentoxy, 3-Methylpentoxy, n-Heptoxy, i-Heptoxy, n-Octoxy, i-Octoxy, 2-Ethylhexoxy.

Bevorzugte Reste $X^1$ sind Wasserstoff, Alkyl mit 2 oder 3 C-Atomen, Alkoxy mit 2 bis 4 C-Atomen. Besonders bevorzugte Reste $X^1$ sind Methyl, Fluor, Chlor, Brom, Trifluormethyl, Methoxy.

Bevorzugte Reste $R^4$ in den Resten $NHCOR^4$, die für $X^4$ stehen, sind ($C_1$ bis $C_6$)Alkyl, insbesondere ($C_1$ bis $C_4$)Alkyl. Ein besonders bevorzugter Rest $R^4$ ist der Propyl- und insbesondere der n-Propylrest.

Bevorzugte Reste $R^1$ sind Alkyl mit 1 bis 4 C-Atomen, besonders bevorzugte Reste $R^1$ sind Alkyl mit 1 bis 3 C-Atomen.

Bevorzugte Reste $R^2$ sind ($C_1$ bis $C_4$)Alkyl, insbesondere ($C_1$ oder $C_2$)Alkyl.

Bevorzugte Reste $R^3$ sind Alkyl mit 1 bis 8 C-Atomen, mit Phenyl substituiertes Alkyl mit 1 bis 3 C-Atomen, mit Cyan oder Chlor substituiertes Alkyl mit 2 oder 3 C-Atomen, mit Alkoxy mit 1 bis 4 C-Atomen, Alkenyloxy mit 3 bis 5 C-Atomen oder Phenoxy substituiertes Alkyl mit 2, vorzugsweise 3 bis 4 C-Atomen, Alkenyl mit 3 bis 5 C-Atomen.

Bevorzugte Farbstoffe der allgemeinen Formel I sind solche mit bevorzugten Resten $X^1$, $R^1$, $R^2$ und $R^3$.

Den erfindungsgemäßen roten ähnliche blaue Farbstoffe sind bereits bekannt und in der DOS 22 54 017 beschrieben. Ähnliche rote Farbstoffe sind z.B. in der DOS 17 94 402 oder in der japanischen Patentanmeldung J6 3051460 beansprucht.

Es wurde jedoch überraschenderweise gefunden, daß die erfindungsgemäßen Farbstoffe diesen bekannten Farbstoffen im färberischen Verhalten auf verschiedenen Substraten sowie bei einigen wichtigen Anwendungs- und Gebrauchsechtheiten, wie pH-Empfindlichkeit, Waschechtheit und insbesondere Lichtechtheit und Thermofixierechtheit deutlich überlegen sind.

Die Herstellung der erfindungsgemäßen Farbstoffe erfolgt vorzugsweise dadurch, daß man einen Azofarbstoff der Formel II

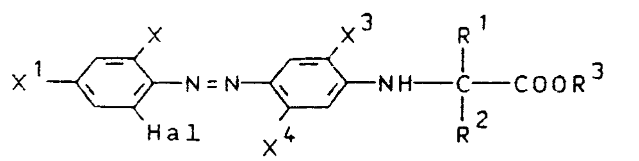
(II)

in welcher $X^1$, $X^4$, $X^3$, $R^1$, $R^2$, und $R^3$ die vorstehenden Bedeutungen haben, X Cyan oder Hal und Hal ein Halogenatom wie Chlor oder insbesondere Brom bedeuten, in an sich bekannter Weise, z.B. nach den Angaben der DE-OS 1809920, der DE-OS 1809921, der GB-PS 1184825, der DE-AS 1544563, der DE-OS 2310745, der DE-AS 2456495, der DE-AS 2610675, der DE-OS 2724116, der DE-OS 2724117, der DE-OS 2834137, der DE-OS 2341109, der US-PS 3821195, der DE-OS 2715034 oder der DE-OS 2134896 einer nucleophilen Austauschreaktion unterwirft, wobei als nucleophiles Agenz das Cyanidion $CN^{\ominus}$ eingesetzt wird. Bei dieser Reaktion wird in dem Farbstoff der Formel II Hal und gegebenenfalls für X stehendes Hal gegen CN ausgetauscht.

Als Lösungsmittel für die Austauschreaktion werden inerte organische Lösungsmittel, wie z.B. Nitrobenzol oder Glykol- oder Diglykol-mono-methyl oder -mono-ethylether oder Mischungen solcher Lösungsmittel untereinander und mit tertiären organischen Stickstoffbasen, dipolare aprotische Lösungsmitel, wie z.B. N-Methylpyrrolidon, Pyridin, Dimetbylformamid, Dimethylsulfoxyd oder Dicyan-dialkylthioether eingesetzt. Weiterhin sind als Medium für die Austauschreaktion Wasser oder wäßrige Systeme bestehend aus Wasser und einem mit Wasser unmischbaren organischen Lösungsmittel, wie z.B. Nitrobenzol, vorzugsweise in Gegenwart eines Netz- bzw. Dispergiermittels oder eines bekannten Phasentransferkatalysators oder aus Wasser und einem wasserlöslichen, inerten organischen Lösungsmittel, wie Ethylenglykol oder Dimethylformamid, geeignet.

Günstig wirkt sich auf die Austauschreaktion auch die Anwesenheit von organischen, basischen Stickstoffverbindungen, wie z.B. Pyridin und Pyridinbasen, aus.

Die Reaktionstemperaturen für die Austauschreaktion liegen normalerweise zwischen 20 und 150 ° C.

Das nucleophile Agenz $CN^{\ominus}$ wird der Reaktion in Form eines gegebenenfalls komplexen Metallcyanids, wie z.B. eines Alkali- oder Erdalkalicyanids, Zinkcyanids, Alkalicyano-zinkats oder -ferrats, vorzugsweise aber in Form von Kupfer-I-cyanid oder eines Kupfer-I-cyanid ausbildenden Systems, zugefügt. Besonders bewährt ist der Einsatz einer Kombination von Alkalicyanid mit Kupfer-I-cyanid, wobei das Gewichtsverhältnis von Alkali und Kupfersalz in weiten Grenzen variiert werden kann.

Der gängige Bereich für das Gewichtsverhältnis Alkalicyanid:Kupfer-I-cyanid liegt bei 5:95 bis 95:5. Auch außerhalb dieser Grenzen ist noch die positive gegenseitige Beeinflussung der Komponenten feststellbar. Selbstverständlich ist es auch möglich, das Kupfer-I-cyanid seinerseits durch ein Kupfer-I-cyanid ausbildendes System, wie z.B. einer Kombination von Alkalicyanid mit einem anderen Kupfersalz, vorzugsweise Kupfer-I-salz, wie z.B. einem Kupfer-I-halogenid, zu ersetzen.

Die zur Herstellung der erfindungsgemäßen Farbstoffe erforderlichen Farbstoffe der Formel II können dadurch hergestellt werden, daß eine Diazoniumverbindung eines Amins der allgemeinen Formel III

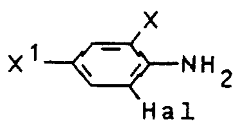

(III)

in an sich bekannter Weise mit einer Kupplungskomponente der allgemeinen Formel IV

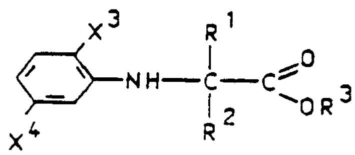

(IV)

worin X, Hal, $X^1$, $X^4$, $X^3$, $R^1$, $R^2$ und $R^3$ die oben angegebenen Bedeutungen haben, gekuppelt wird.

Aus den Aminen der allgemeinen Formel III werden die Diazoniumverbindungen in an sich bekannter Weise durch Einwirkung von salpetriger Säure oder anderen Nitrosoniumionen bildenden Systemen in einer Mineralsäure oder einem mineralsauren wäßrigen Medium, einer Niederalkancarbonsäure, wie z.B. Ameisensäure, Essigsäure oder Propionsäure oder deren Mischungen, oder einem organischen Lösungsmittel bei Temperaturen von -15 ° C bis 40 ° C erhalten.

Die Kupplung erfolgt ebenfalls in an sich bekannter Weise durch Vereinigung der erhaltenen Lösung der Diazoniumverbindung mit einer Lösung der Kupplungskomponente bei Temperaturen von 0 bis 40 ° C, vorzugsweise 0 bis 25 ° C, in einem geeigneten Lösungsmittel, wie z.B. einem Alkanol mit 1 bis 4 C-Atomen, Dimethylformamid, vorzugsweise in mit Schwefelsäure, Salzsäure oder Phosphorsäure angesäuertem Wasser, oder einer gegebenenfalls wasserhaltigen Niederalkancarbonsäure oder einem Niederalkancarbonsäuregemisch, gegebenenfalls auch in Gegenwart eines mit Wasser begrenzt mischbaren Alkanols. In manchen Fällen kann es zweckmäßig sein, während der Kupplung den pH-Wert abzupuffern, z.B. durch Zugabe von Natriumacetat. Die Kupplung ist nach einigen Stunden beendet, und der Farbstoff der Formel II kann wie üblich isoliert und getrocknet werden.

Die benötigten Verbindungen der Formeln III und IV sind bekannt oder lassen sich aus bekannten Handelsprodukten nach bekannten Verfahren herstellen.

Ein weiteres Verfahren zur Herstellung der erfindungsgemäßen Farbstoffe besteht darin, daß eine Diazoniumverbindung eines Amins der Formel V

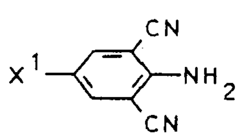

(V)

in an sich bekannter Weise mit einer Kupplungskomponente der Formel IV

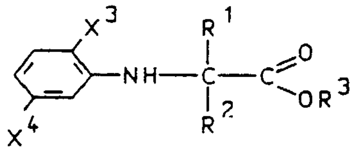

(IV)

wobei $X^1$, $X^4$, $X^3$, $R^1$, $R^2$ und $R^3$ die oben angegebenen Bedeutungen haben, gekuppelt wird.

Aus den Aminen der allgemeinen Formel V werden die Diazoniumverbindungen in an sich bekannter Weise durch Einwirkung von salpetriger Säure oder anderen, Nitrosoniumionen bildenden Systemen in einer Mineralsäure oder einem mineralsauren wäßrigen Medium, einer Niederalkancarbonsäure, wie z.B. Ameisensäure, Essigsäure oder Propionsäure oder deren Mischungen, oder einem organischen Lösungsmittel bei Temperaturen von -20° bis 20°C erhalten.

Die Kupplung erfolgt auch hier in an sich bekannter Weise durch Vereinigung der erhaltenen Lösung der Diazoniumverbindung mit einer Lösung der Kupplungskomponente bei Temperaturen von 0 bis 40°C, vorzugsweise 0 bis 25°C, in einem geeigneten Lösungsmittel, wie z.B. einem Alkanol mit 1 bis 4 C-Atomen, Dimethylformamid, vorzugsweise in mit Schwefelsäure, Salzsäure oder Phosphorsäure angesäuertem Wasser, oder einer gegebenenfalls wasserhaltigen Niederalkancarbonsäure oder einem Niederalkancarbonsäuregemisch, gegebenenfalls auch in Gegenwart eines mit Wasser begrenzt mischbaren Alkanols. In manchen Fällen kann es zweckmäßig sein, während der Kupplung den pH-Wert abzupuffern, z.B. durch Zugabe von Natriumacetat. Die Kupplung ist nach einigen Stunden beendet, und der Farbstoff kann wie üblich isoliert und getrocknet werden.

Erfindungsgemäße Farbstoffmischungen bestehen aus zwei oder mehreren Farbstoffen der Formel I, in der $R^1$ bis $R^3$ und $X^1$ bis $X^4$ die oben angegebenen Bedeutungen haben.

In den erfindungsgemäßen Farbstoffmischungen kann das Verhältnis der verschiedenen Farbstoffe der allgemeinen Formel I in relativ weiten Grenzen variieren. Im allgemeinen beträgt der Mindestgewichtsanteil einer Komponente 10 % und ihr maximaler Gewichtsanteil 90 %. Bei Farbstoffmischungen, die nur aus zwei Farbstoffen der allgemeinen Formel I bestehen, ist ein Gewichtsverhältnis von 70:30 bis 30:70 bevorzugt, d.h. der Gewichtsanteil eines Farbstoffs beträgt 30 bis 70 %.

Die erfindungsgemäßen Mischungen können hergestellt werden durch Mischen der separat hergestellten und gefinishten Einzelfarbstoffkomponenten. Dieses Mischen kann in geeigneten Mischern oder Mühlen oder aber durch Einrühren in die Färbeflotte geschehen. Es ist aber bevorzugt, die separat hergestellten Einzelfarbstoffkomponenten gemeinsam zu finishen, wobei das Mischen bei der Herstellung von Farbstoffpulvern unmittelbar vor dem Sprühtrocknen, bei Farbstoffpulvern und flüssigen Farbstoffpräparationen, vorzugsweise vor dem Aufmahlen, erfolgen kann. Besonders bevorzugt ist hierbei eine gemeinsame thermische Stabilisierung vor dem Aufmahlen.

Nach einem besonders bevorzugten Verfahren können die erfindungsgemäßen Farbstoffmischungen dadurch hergestellt werden, daß man in Farbstoffmischungen, die aus mindestens zwei Farbstoffen der allgemeinen Formel I bestehen, in an sich bekannter Weise Halogen gegen Cyan austauscht, wie es z.B. vorstehend bereits für die Einzelfarbstoffe beschrieben ist, und die erhaltene Mischung finisht. Die Zusammensetzung der Mischung der Farbstoffe der allgemeinen Formel II wird dabei so gewählt, daß erfindungsgemäße Farbstoffmischungen entstehen.

Die erfindungsgemäßen Farbstoffe und Farbstoffmischungen sind einzeln oder im Gemisch mit anderen Dispersionsfarbstoffen vorzüglich zum Färben und Bedrucken von hydrophoben synthetischen Materialien geeignet. Als hydrophobe synthetische Materialien kommen z.B. in Betracht: Cellulose-2 1/2-acetat, Cellulosetriacetat, Polyamide und hochmolekulare Polyester. Vorzugsweise werden die erfindungsgemäßen Farbstoffe zum Färben und Bedrucken von Materialien aus hochmolekularen Polyestern, insbesondere solchen auf Basis von Polyethylenglykolterephthalaten oder deren Mischungen mit natürlichen Faserstoffen, oder von Materialien aus Zellulosetriacetat eingesetzt.

Die hydrophoben synthetischen Materialien können in Form von flächen- oder fadenförmigen Gebilden vorliegen und z.B. zu Garnen oder gewebten, gewirkten oder gestrickten Textilstoffen verarbeitet sein. Das Färben des genannten Fasergutes mit den erfindungsgemäßen Farbstoffen oder Farbstoffmischungen erfolgt in an sich bekannter Weise, vorzugsweise aus wäßriger Suspension, gegebenenfalls in Gegenwart von Carriern, zwischen 80 bis ca. 110°C nach dem Ausziehverfahren oder nach dem HT-Verfahren im Färbeautoklav bei 110 bis 140°C, sowie nach dem sogenannten Thermofixierverfahren, wobei die Ware mit der Färbeflotte geklotzt und anschließend bei etwa 80 bis 230°C fixiert wird. Das Bedrucken der genannten Materialien kann in an sich bekannter Weise so durchgeführt werden, daß die erfindungsgemäßen Farbstoffe oder Farbstoffmischungen in eine Druckpaste einverleibt werden und die damit bedruckte Ware zur Fixierung des Farbstoffs, gegebenenfalls in Gegenwart eines Carriers, bei Temperaturen zwischen 80 bis 230 °C mit HT-Dampf, Druckdampf oder Trockenhitze behandelt wird. Man erhält auf diese Weise sehr farbstarke rote Färbungen und Drucke mit sehr guten Echtheitseigenschaften, insbesondere einer sehr guten Licht-, Thermofixier-, Thermomigrier- und Waschechtheit und einer geringen pH- und Reduktionsempfindlichkeit. Besonders hervorzuheben ist die sehr gute Heißlichtechtheit.

Die erfindungsgemäßen Farbstoffe oder Farbstoffmischungen eignen sich auch zum Färben der vorstehend aufgeführten hydrophoben Materialien aus organischen Lösungsmitteln nach den hierbei bekannten Methoden und zum Färben in der Masse.

In den bei obigen Applikationen eingesetzten Färbeflotten und Druckpasten sollen die erfindungsgemäßen Farbstoffe oder Farbstoffmischungen in möglichst feiner Verteilung vorliegen.

Die Feinverteilung der Farbstoffe erfolgt in an sich bekannter Weise dadurch, daß man den in der Fabrikation anfallenden Farbstoff zusammen mit Dispergiermiteln in einem flüssigen Medium, vorzugsweise in Wasser, aufschlämmt und die Mischung der Einwirkung von Scherkräften aussetzt, wobei die ursprünglich vorhandenen Farbstoff-Teilchen mechanisch so weit zerkleinert werden, daß eine optimale spezifische Oberfläche erreicht wird und die Sedimentation des Farbstoffs möglichst gering ist. Die Teilchengrößen der Farbstoffe liegt im allgemeinen zwischen 0,5 und 5 $\mu$m, vorzugsweise bei etwa 1 $\mu$m.

Die bei dem Mahlvorgang mitverwendeten Dispergiermittel können nichtionogen oder anionaktiv sein. Nichtionogene Dispergiermittel sind z.B. Umsetzungsprodukte von Alkylenoxiden, wie z.B. Ethylen- oder Propylenoxid mit alkylierbaren Verbindungen, wie z.B. Fettalkoholen, Fettaminen, Fettsäuren, Phenolen, Alkylphenolen und Carbonsäureamiden. Anionaktive Dispergiermittel sind beispielsweise Ligninsulfonate, Alkyl- oder Alkylarylsulfonate oder Alkyl-aryl-polyglykolethersulfate.

Die so erhaltenen Farbstoffzubereitungen sollen für die meisten Anwendungsweisen gießbar sein. Der Farbstoff- und Dispergiermittelgehalt ist daher in diesen Fällen limitiert. Im allgemeinen werden die Dispersionen auf einen Farbstoffgehalt bis zu 50 Gewichtsprozent und einen Dispergiermittelgehalt bis zu etwa 25 % eingestellt. Aus ökonomischen Gründen werden Farbstoffgehalte von 15 Gewichtsprozent meist nicht unterschritten.

Die Dispersionen können auch noch weitere Hilfsmittel enthalten, z.B. solche, die als Oxidationsmittel wirken, wie z.B. Natrium-m-nitrobenzolsulfonat oder fungicide Mittel, wie z.B. Natrium-o-phenyl-phenolat und Natriumpentachlorphenolat.

Die so erhaltenen Farbstoffdispersionen können sehr vorteilhaft zum Ansatz von Druckpasten und Färbeflotten verwendet werden. Besondere Vorteile bieten sie z.B. bei den Kontinue-Verfahren, bei denen durch kontinuierliche Farbstoff-Einspeisung in die laufende Apparatur die Farbstoffkonzentration der Färbeflotten konstant gehalten werden muß.

Für gewisse Anwendungsbereiche werden Pulvereinstellungen bevorzugt. Diese Pulver enthalten den Farbstoff oder das Farbstoffgemisch, Dispergiermittel und andere Hilfsmittel, wie z.B. Netz-, Oxydations-, Konservierungs-und Entstaubungsmittel.

Ein bevorzugtes Herstellungsverfahren für pulverförmige Farbstoffzubereitungen besteht darin, daß den oben beschriebenen flüssigen Farbstoffdispersionen die Flüssigkeit entzogen wird, z.B. durch Vakuumtrocknung, Gefriertrocknung, durch Trocknung auf Walzentrocknern, vorzugsweise aber durch Sprühtrocknung.

Zur Herstellung der Färbeflotten werden die erforderlichen Mengen der Farbstoffeinstellungen, die gemäß den obigen Angaben hergestellt wurden, mit dem Färbemedium, vorzugsweise mit Wasser, so weit verdünnt, daß sich für die Färbung ein Flottenverhältnis von 1:5 bis 1:50 ergibt. Zusätzlich werden den Flotten im allgemeinen weitere Färbereihilfsmittel, wie Dispergier-, Netz- und Fixierhilfsmittel zugesetzt.

Soll der Farbstoff oder die Farbstoffmischung für den Textildruck herangezogen werden, so werden die erforderlichen Mengen der Farbstoffeinstellungen zusammen mit Verdickungsmitteln, wie z.B. Alkali-Alginaten oder dergleichen, und gegebenenfalls weiteren Zusätzen, wie z.B. Fixierbeschleunigern, Netzmitteln und Oxydationsmitteln, zu Druckpasten verknetet.

Die Erfindung wird durch die folgenden Beispiele weiter erläutert. Prozentangaben sind Gewichtsprozente, Teile sind Gewichtsteile.

Beispiel 1

a) In eine Suspension aus 100 ml Dimethylsulfoxid, 4,3 g Natriumcyanid und 14 g Kupfer-I-cyanid werden bei 70 bis 75 °C 66,1 g des Farbstoffs der Formel VI

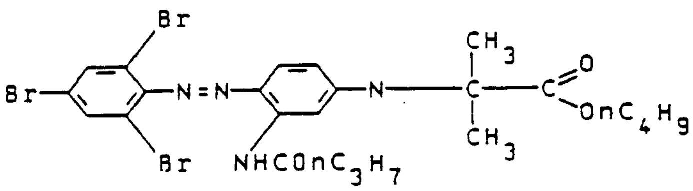

(VI)

eingetragen und es wird 30 min bei dieser Temperatur gerührt. Dann wird die Temperatur 30 min auf 110 °C angehoben und der Ansatz anschließend langsam kaltgerührt, abgesaugt: mit 45 ml Dimethylsulfoxid, 7,5%iger wäßriger Ammoniaklösung und Wasser gewaschen und unter vermindertem Druck getrocknet. Man erhält so 47,3 g eines blaustichig roten Farbstoffs der Formel VII

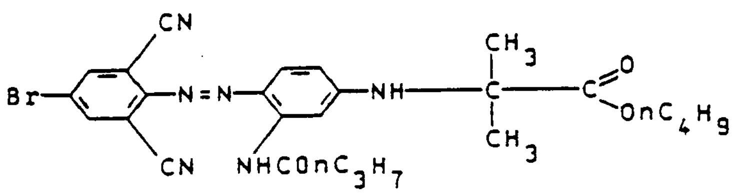

(VII)

der bei 528 µm sein Absorptionsmaximum hat und sich in o-Dichlorbenzol mit klarem blaustichig roten Farbton löst.

b) Aus 30 Teilen des Farbstoffs der Formel VII und 70 Teilen eines Dispergiermittels aus der Reihe der Ligninsulfonate stellt man durch wäßriges Vermahlen in einer Perlmühle eine feine Farbstoffdispersion her und trocknet diese durch Sprühtrocknung.

c) 1,2 g der so erhaltenen Farbstoffpräparation werden in 2000 g Wasser dispergiert. Die Dispersion wird mit Essigsäure auf einen pH-Wert von 4 - 5 eingestellt und mit 4 g wasserfreiem Natriumacetat und 2 g eines handelsüblichen Dispergiermittels auf Basis eines Naphthalinsulfonsäure-Formaldehyd-Kondensats versetzt. In die so erhaltene Färbeflotte bringt man 100 g eines Polyestergewebes auf Basis von Polyethylenglykolterephthalat ein und färbt 30 min bei 130 °C. Nach anschließendem Spülen, reduktivem Nachbehandeln mit einer 0,2%igen wäßrigen Natriumdithionitlösung während 15 min bei 70 bis 80 °C, Spülen und Trocknen erhält man eine farbstarke rote Färbung mit sehr guten coloristischen Eigenschaften, insbesondere sehr guter Thermofixier- und Heißlichtechtheit.

Beispiel 2

a) Werden, wie in Beispiel 1 beschrieben, 61,7 g des Farbstoffs der Formel VIII

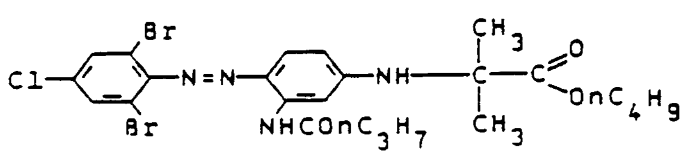

(VIII)

einem Cyanaustausch unterworfen, so erhält man 46 g eines blaustichig roten Farbstoffs der Formel IX

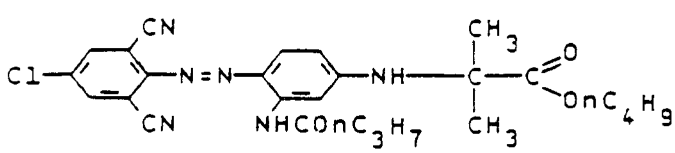

(IX)

der bei 526 µm sein Absorptionsmaximum hat und sich in o-Dichlorbenzol mit klarem blaustichig roten Farbton löst.

b) 15,0 g des so erhaltenen Farbstoffs werden in feiner Verteilung einer Druckpaste, die 45,0 g Johannisbrotkernmehl, 6,0 g 3-nitrobenzolsulfonsaures Natrium und 3,0 g Zitronensäure auf 100 g

enthält, einverleibt. Wird Polyester mit dieser Druckpaste bedruckt, das behandelte Gewebe nach dem Trocknen 45 sek. bei 210 °C thermosoliert, so erhält man einen farbstarken blaustichig roten Druck mit hervorragenden Echtheiten, insbesondere einer guten Thermofixierechtheit und einer ausgezeichneten Heißlichtechtheit.

Analog den Beispielen 1 und 2 lassen sich die erfindungsgemäßen Farbstoffe der folgenden Tabellen herstellen. Sie färben hydrophobe Fasern ebenfalls in vollen orangefarbenen bis violetten Nuancen mit ausgezeichneten Echtheiten. In den letzten Spalten der nachfolgenden Tabellen sind für die Farbnuancen folgende Abkürzungen verwendet:

| | |
|---|---|
| orange | 1 |
| scharlach | 2 |
| rot | 3 |
| blaustichig rot | 4 |
| violett | 5 |

In den Tabellen ist bei verzweigten Resten die Verzweigung durch i für iso, sek. für sekundär etc. angegeben, bei cyclischen Resten ist cyclo angegeben. Bei Resten ohne derartige Angaben handelt es sich um normale unverzweigte Reste.

Tabelle 1

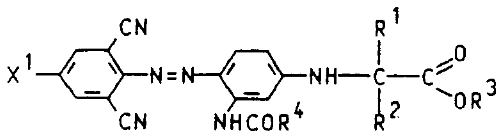

| $X^1$ | $R^4$ | $R^1$ | $R^2$ | $R^3$ | Nuance auf PES |
|---|---|---|---|---|---|
| Cl | $CH_3$ | $CH_3$ | $CH_3$ | $C_4H_9$ | 4 |
| Cl | $CH_3$ | $CH_3$ | $CH_3$ | $iC_3H_7$ | 4 |
| Cl | $CH_3$ | $CH_3$ | $CH_3$ | $iC_4H_9$ | 4 |
| Cl | $CH_3$ | $CH_3$ | $CH_3$ | $C_3H_7$ | 4 |
| Cl | $CH_3$ | $CH_3$ | $CH_3$ | $C_5H_{11}$ | 4 |
| Cl | $CH_3$ | $CH_3$ | $C_2H_5$ | $C_2H_5$ | 4 |
| Cl | $CH_3$ | $CH_3$ | $C_2H_5$ | $iC_3H_7$ | 4 |
| Cl | $CH_3$ | $CH_3$ | $C_3H_7$ | $C_3H_7$ | 4 |
| Cl | $CH_3$ | $C_2H_5$ | $C_2H_5$ | $C_4H_9$ | 4 |
| Cl | $CH_3$ | $C_2H_5$ | $C_4H_9$ | $CH_3$ | 4 |
| Cl | $CH_3$ | H | $iC_3H_7$ | $iC_5H_{11}$ | 4 |
| Cl | $CH_3$ | H | $C_2H_5$ | $(CH_2)_2OC_2H_5$ | 4 |
| Cl | $C_2H_5$ | $CH_3$ | $CH_3$ | $C_3H_7$ | 4 |
| Cl | $C_2H_5$ | $CH_3$ | $C_2H_5$ | $C_4H_9$ | 4 |
| Cl | $C_2H_5$ | $C_2H_5$ | $C_2H_5$ | $CH_2CH{=}CH_2$ | 4 |
| Cl | $C_2H_5$ | H | $C_3H_7$ | $iC_4H_9$ | 4 |
| Cl | $iC_3H_7$ | $CH_3$ | $CH_3$ | $C_2H_5$ | 4 |
| Cl | $iC_3H_7$ | $CH_3$ | $C_4H_9$ | $(CH_2)_2Cl$ | 4 |
| Cl | $iC_3H_7$ | $CH_3$ | $C_2H_5$ | $C_3H_7$ | 4 |
| Cl | $C_3H_7$ | $CH_3$ | $CH_3$ | $iC_3H_7$ | 4 |
| Cl | $C_3H_7$ | $CH_3$ | $CH_3$ | $iC_4H_9$ | 4 |
| Cl | $C_3H_7$ | $CH_3$ | $C_3H_7$ | $C_4H_9$ | 4 |
| Cl | $C_3H_7$ | $C_6H_{13}$ | H | $CH_3$ | 4 |
| Cl | $C_3H_7$ | $iC_3H_7$ | H | $(CH_2)_4OCH_3$ | 4 |
| Cl | $C_3H_7$ | $CH_3$ | $CH_3$ | $(CH_2)_2OC_2H_5$ | 4 |
| Cl | $C_3H_7$ | $CH_3$ | $CH_3$ | $(CH_2)_2C_6H_5$ | 4 |
| Cl | $C_3H_7$ | $CH_3$ | $C_2H_5$ | $C_3H_7$ | 4 |

| $X^1$ | $R^4$ | $R^1$ | $R^2$ | $R^3$ | Nuance auf PES |
|---|---|---|---|---|---|
| Cl | $C_4H_9$ | H | $C_2H_5$ | $C_4H_9$ | 4 |
| Cl | $C_4H_9$ | $CH_3$ | $CH_3$ | $iC_3H_7$ | 4 |
| Cl | $CH(CH_3)C_2H_5$ | $CH_3$ | $CH_3$ | $C_2H_5$ | 4 |
| Cl | $CH_2CH(CH_3)_2$ | H | $C_3H_7$ | $C_3H_7$ | 4 |
| Cl | $CH(CH_3)C_3H_7$ | $C_2H_5$ | $C_2H_5$ | $(CH_2)_2O(CH_2)_2OCH_3$ | 4 |
| Cl | $CH(C_2H_5)_2$ | $CH_3$ | $CH_3$ | $(CH_2)_2CN$ | 4 |
| Br | $CH_3$ | $CH_3$ | $CH_3$ | $C_2H_5$ | 4 |
| Br | $CH_3$ | $CH_3$ | $CH_3$ | $C_3H_7$ | 4 |
| Br | $CH_3$ | $CH_3$ | $CH_3$ | $iC_3H_7$ | 4 |
| Br | $CH_3$ | $CH_3$ | $CH_3$ | $C_4H_9$ | 4 |
| Br | $CH_3$ | $CH_3$ | $CH_3$ | $iC_4H_9$ | 4 |
| Br | $CH_3$ | $CH_3$ | $CH_3$ | $CH_2CH(C_2H_5)C_4H_9$ | 4 |
| Br | $CH_3$ | $CH_3$ | $CH_3$ | $CH_2C_6H_5$ | 4 |
| Br | $CH_3$ | $CH_3$ | $CH_3$ | $CH_2CH=CH_2$ | 4 |
| Br | $CH_3$ | $CH_3$ | $CH_3$ | $(CH_2)_4O-COCH_3$ | 4 |
| Br | $CH_3$ | $CH_3$ | $C_2H_5$ | $CH_3$ | 4 |
| Br | $CH_3$ | $CH_3$ | $C_2H_5$ | $C_3H_7$ | 4 |
| Br | $CH_3$ | $CH_3$ | $C_3H_7$ | $iC_3H_7$ | 4 |
| Br | $CH_3$ | $C_2H_5$ | $C_2H_5$ | $C_2H_5$ | 4 |
| Br | $CH_3$ | $C_6H_{13}$ | H | $(CH_2)_2OC_6H_5$ | 4 |
| Br | $CH_3$ | $C_2H_5$ | $C_4H_9$ | $CH_2CH=CH-CH_3$ | 4 |
| Br | $C_2H_5$ | $CH_3$ | $CH_3$ | $C_4H_9$ | 4 |
| Br | $C_2H_5$ | $CH_3$ | $C_2H_5$ | $C_5H_{11}$ | 4 |
| Br | $iC_3H_7$ | $CH_3$ | $CH_3$ | $iC_3H_7$ | 4 |
| Br | $iC_3H_7$ | $CH_3$ | $CH_3$ | $(CH_2)_2Br$ | 4 |
| Br | $iC_3H_7$ | $CH_3$ | $C_2H_5$ | $C_4H_9$ | 4 |
| Br | $C_3H_7$ | $CH_3$ | $CH_3$ | $iC_4H_9$ | 4 |
| Br | $C_3H_7$ | $CH_3$ | $CH_3$ | $C_6H_{13}$ | 4 |
| Br | $C_3H_7$ | H | $C_3H_7$ | sek.$C_4H_9$ | 4 |
| Br | $C_3H_7$ | $C_3H_7$ | $C_3H_7$ | $C_3H_7$ | 4 |
| Br | $C_3H_7$ | $CH_3$ | $CH_3$ | $CH_2CH(OH)CH_2OCH_3$ | 4 |
| Br | $C_3H_7$ | H | $C_2H_5$ | cyclo-$C_6H_{11}$ | 4 |
| Br | $C_3H_7$ | $CH_3$ | $CH_3$ | $C_3H_7$ | 4 |
| Br | $C_3H_7$ | $CH_3$ | $C_2H_5$ | $(CH_2)_4OC_3H_7$ | 4 |

| $X^1$ | $R^4$ | $R^1$ | $R^2$ | $R^3$ | Nuance auf PES |
|---|---|---|---|---|---|
| Br | $C_3H_7$ | $C_5H_{11}$ | H | $CH_2C_6H_5$ | 4 |
| Br | $C_3H_7$ | $CH_3$ | $C_2H_5$ | $C_4H_9$ | 4 |
| Br | $C_3H_7$ | $C_2H_5$ | $C_2H_5$ | $iC_4H_9$ | 4 |
| Br | $C_3H_7$ | $C_2H_5$ | $C_2H_5$ | $(CH_2)_2OC_2H_5$ | 4 |
| Br | $C_3H_7$ | $CH_3$ | $C_4H_9$ | $C_2H_5$ | 4 |
| Br | $CH(CH_3)C_2H_5$ | $CH_3$ | $CH_3$ | $iC_3H_7$ | 4 |
| Br | $CH(C_2H_5)_2$ | H | $C_3H_7$ | Tetrahydrofurfuryl | 4 |
| F | $CH_3$ | $CH_3$ | $CH_3$ | $C_4H_9$ | 3 |
| F | $CH_3$ | $CH_3$ | $CH_3$ | $iC_3H_7$ | 3 |
| F | $CH_3$ | $CH_3$ | $C_2H_5$ | $C_2H_5$ | 3 |
| F | $C_2H_5$ | $CH_3$ | $CH_3$ | $iC_4H_9$ | 3 |
| F | $C_2H_5$ | $C_2H_5$ | $C_2H_5$ | $(CH_2)_2OCH_2CH{=}CH_2$ | 3 |
| F | $iC_3H_7$ | $CH_3$ | $C_2H_5$ | $CH_3$ | 3 |
| F | $iC_3H_7$ | H | $iC_3H_7$ | $(CH_2)_2COOC_2H_5$ | 3 |
| F | $iC_3H_7$ | $CH_3$ | $CH_3$ | $iC_5H_{11}$ | 3 |
| F | $C_3H_7$ | $CH_3$ | $CH_3$ | $iC_4H_9$ | 3 |
| F | $C_3H_7$ | $CH_3$ | $C_2H_5$ | $CH_2C_6H_5$ | 3 |
| F | $C_3H_7$ | $CH_3$ | $CH_3$ | $iC_6H_{13}$ | 3 |
| F | $C_3H_7$ | H | $C_3H_7$ | $(CH_2)_2C_6H_5$ | 3 |
| F | $CH(CH_3)C_2H_5$ | $CH_3$ | $CH_3$ | $C_2H_5$ | 3 |
| F | $CH(CH_3)C_3H_7$ | H | $C_2H_5$ | $C_4H_9$ | 3 |
| $CF_3$ | $CH_3$ | $C_2H_5$ | $C_2H_5$ | $CH_2CH{=}CH_2$ | 5 |
| $CF_3$ | $CH_3$ | H | $C_2H_5$ | $C_5H_{11}$ | 5 |
| $CF_3$ | $C_2H_5$ | $C_2H_5$ | $C_4H_9$ | $C_3H_7$ | 5 |
| $CF_3$ | $iC_3H_7$ | $CH_3$ | $CH_3$ | $(CH_2)_2OCOC_6H_5$ | 5 |
| $CF_3$ | $C_3H_7$ | $CH_3$ | $CH_3$ | $C_3H_7$ | 5 |
| $CF_3$ | $C_3H_7$ | $CH_3$ | $C_2H_5$ | $iC_3H_7$ | 5 |
| $OCH_3$ | $CH_3$ | $CH_3$ | $CH_3$ | $(CH_2)_2O$cyclo$C_6H_{11}$ | 2 |
| $OCH_3$ | $C_2H_5$ | $CH_3$ | $CH_3$ | $C_5H_{11}$ | 2 |
| $OCH_3$ | $iC_3H_7$ | $CH_3$ | $iC_3H_7$ | $C_2H_5$ | 2 |
| $OCH_3$ | $C_3H_7$ | $CH_3$ | $CH_3$ | $(CH_2)_2OCOC_2H_5$ | 2 |
| $OC_2H_5$ | $C_3H_7$ | $C_2H_5$ | $C_2H_5$ | $CH_2C_6H_5$ | 2 |
| $OiC_3H_7$ | $CH_3$ | $CH_3$ | $CH_3$ | $(CH_2)_2COOCH_2CH{=}CH_2$ | 2 |
| $OC_4H_9$ | $iC_3H_7$ | H | $C_3H_7$ | $CH_3$ | 2 |

| $X^1$ | $R^4$ | $R^1$ | $R^2$ | $R^3$ | Nuance auf PES |
|---|---|---|---|---|---|
| $CH_3$ | $CH_3$ | H | $C_2H_5$ | $iC_4H_9$ | 2 |
| $CH_3$ | $CH_3$ | $CH_3$ | $CH_3$ | $iC_4H_9$ | 2 |
| $CH_3$ | $CH_3$ | $CH_3$ | $C_2H_5$ | $(CH_2)_2O(CH_2)_2OC_2H_5$ | 2 |
| $CH_3$ | $C_3H_7$ | $CH_3$ | $CH_3$ | $C_4H_9$ | 2 |
| $CH_3$ | $C_3H_7$ | $CH_3$ | $CH_3$ | $iC_3H_7$ | 2 |
| $CH_3$ | $C_3H_7$ | $CH_3$ | $C_2H_5$ | $CH_2CH{=}CH_2$ | 2 |
| $CH_3$ | $C_3H_7$ | $C_2H_5$ | $C_2H_5$ | $C_3H_7$ | 2 |
| $CH_3$ | $CH(C_2H_5)_2$ | $CH_3$ | $CH_3$ | $C_2H_5$ | 2 |
| $CH_3$ | $C_2H_5$ | H | $iC_3H_7$ | $(CH_2)_2COOC_6H_5$ | 2 |
| $C_2H_5$ | $C_2H_5$ | $CH_3$ | $CH_3$ | $(CH_2)_4OCH_3$ | 2 |
| $iC_3H_7$ | $CH_3$ | $C_2H_5$ | $C_4H_9$ | $CH_3$ | 2 |
| $cycloC_6H_{11}$ | $iC_3H_7$ | $CH_3$ | $CH_3$ | $C_2H_5$ | 2 |
| H | $CH_3$ | $CH_3$ | $C_3H_7$ | $(CH_2)_2C_6H_5$ | 3 |
| H | $C_3H_7$ | $CH_3$ | $CH_3$ | $(CH_2)_4OC_6H_5$ | 3 |
| H | $C_3H_7$ | $C_2H_5$ | $C_2H_5$ | $C_3H_7$ | 3 |
| H | $C_2H_5$ | $CH_3$ | $C_3H_7$ | $C_4H_9$ | 3 |

## Patentansprüche

1. Azofarbstoffe der allgemeinen Formel I

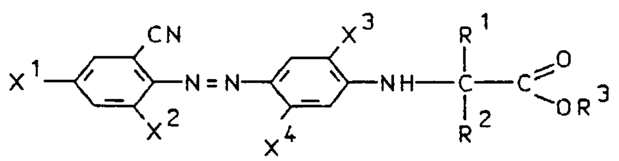

(I)

in der

$X^1$ Wasserstoff; ($C_1$ bis $C_6$)Alkyl; Cyclopentyl; Cyclohexyl; Fluor; Chlor; Brom; Trifluormethyl; ($C_1$ bis $C_4$)Alkoxy, das durch ($C_1$ bis $C_4$)Alkoxy und/oder Hydroxy substituiert sein kann,

$X^2$ Cyan;

$X^3$ Wasserstoff;

$X^4$ $NHCOR^4$;

$R^1$ Wasserstoff; ($C_1$ bis $C_6$)Alkyl;

$R^2$ ($C_1$ bis $C_6$)Alkyl;

$R^3$ ($C_1$ bis $C_8$)Alkyl; ($C_1$ bis $C_8$)Alkyl, das ein- oder mehrfach durch Sauerstoffatome unterbrochen sein kann und/oder ein- oder mehrfach mit Chlor, Brom, Cyan, Hydroxy, Phenyl, Phenoxy, ($C_1$ bis $C_8$)-Alkoxy, ($C_3$ bis $C_5$)Alkenyloxy, Cyclopentyloxy, Cyclohexyloxy, Tetrahydrofurfuryl, Tetrahydrofurfuryloxy, ($C_1$-$C_4$)Alkyl-tetrahydrofurfuryl, Tetrahydropyronyl, ($C_1$ bis $C_4$)Alkyl-tetrahydropyronyl, ($C_1$ bis $C_4$)-Alkoxy-carbonyl, ($C_1$ bis $C_4$)Alkoxy-carbonyloxy, ($C_1$ bis $C_4$)Alkyl-carbonyloxy, ($C_3$ bis $C_5$)Alkenyloxy-carbonyl, ($C_3$ bis $C_5$)Alkenyloxy-carbonyloxy, Cyclopentyloxy-carbonyl, Cyclohexyloxy-carbonyl, Phenoxy-carbonyl, Phenoxy-carbonyloxy und/oder Phenylcarbonyloxy substituiert ist, wobei das Phenoxy-carbonyl oder das Phenoxy-carbonyloxy oder das Phenyl-carbonyloxy seinerseits ein- oder mehrfach

mit ($C_1$ bis $C_4$)Alkyl, Chlor, Brom und/oder Cyan substituiert sein kann; ($C_3$ bis $C_5$)Alkenyl; Cyclopentyl; Cyclohexyl; Tetrahydrofurfuryl; Benzyl; Benzyl, das mit Chlor, Brom, Nitro, Cyan, ($C_1$ bis $C_4$)Alkyl und/oder ($C_1$ bis $C_4$)Alkoxy ein- oder mehrfach substituiert ist; Phenyl; ($C_5$ bis $C_{16}$)Alkyl, das durch 2 oder 3 Sauerstoffatome unterbrochen ist;
$R^4$ ($C_1$ bis $C_8$)Alkyl, das mit Fluor, Chlor, Brom, Hydroxy, ($C_1$ bis $C_4$)Alkoxy ein- oder mehrfach substituiert sein kann; Phenyl; ($C_1$ bis $C_4$)Alkoxy; Phenoxy;
bedeuten.

**2.** Azofarbstoffe nach Anspruch 1, dadurch gekennzeichnet, daß $X^1$ Wasserstoff, ($C_2$ oder $C_3$)Alkyl, ($C_2$ bis $C_4$)Alkoxy, Fluor, Chlor, Brom, Methyl, Methoxy oder Trifluormethyl bedeutet.

**3.** Azofarbstoffe nach Anspruch 1 und/oder 2, dadurch gekennzeichnet, daß $R^4$ ($C_1$ bis $C_6$)Alkyl, insbesondere ($C_1$ bis $C_4$)Alkyl und $R^5$ ($C_1$ bis $C_4$) Alkyl bedeutet.

**4.** Azofarbstoffe nach einem oder mehreren der Ansprüche 1 bis 3, dadurch gekennzeichnet, daß $R^1$ ($C_1$ bis $C_4$) Alkyl, insbesondere ($C_1$ bis $C_3$)Alkyl und/oder $R^2$ ($C_1$ bis $C_4$)-Alkyl, insbesondere ($C_1$ oder $C_2$)-Alkyl bedeutet.

**5.** Azofarbstoffe nach einem oder mehreren der Ansprüche 1 bis 4, dadurch gekennzeichnet, daß $R^3$ ($C_1$ bis $C_8$)Alkyl, $C_3$ bis $C_5$)Alkenyl, mit Phenyl substituiertes ($C_1$ bis $C_3$)Alkyl, mit Cyan oder Chlor substituiertes ($C_2$ oder $C_3$)Alkyl, mit ($C_1$ bis $C_4$)Alkoxy oder ($C_3$ bis $C_5$)Alkenyloxy oder Phenoxy substituiertes ($C_2$ bis $C_4$)Alkyl, bedeutet.

**6.** Farbstoffmischungen, dadurch gekennzeichnet, daß sie zwei oder mehrere Azofarbstoffe eines oder mehrerer der Ansprüche 1 bis 5 enthalten.

**7.** Verfahren zur Herstellung von Azofarbstoffen der Formel I des Anspruchs 1, dadurch gekennzeichnet, daß man ein Amin der Formel V

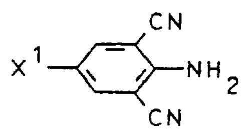

(V)

diazotiert und auf eine Kupplungskomponente der Formel IV

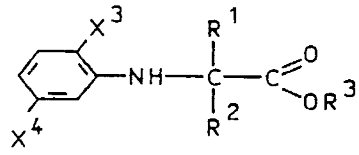

(IV)

wobei $X^1$, $X^4$, $X^3$, $R^1$, $R^2$ und $R^3$ die in Anspruch 1 angegebenen Bedeutungen haben, kuppelt oder daß man bevorzugt einen Azofarbstoff der Formel II

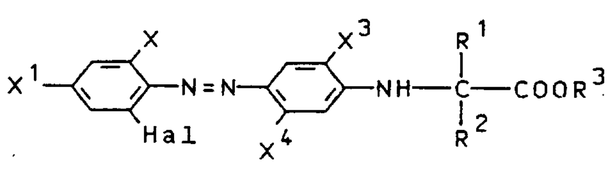

(II)

in welcher $X^1$, $X^4$, $X^3$, $R^1$, $R^2$ und $R^3$ die in Anspruch 1 angegebenen Bedeutungen haben, X Cyan oder Hal und Hal ein Halogenatom, insbesondere Chlor oder Brom bedeutet, in an sich bekannter Weise einer nucleophilen Austauschreaktion mit $CN^{\ominus}$ als nucleophilem Agens unterwirft.

8. Verwendung der Azofarbstoffe der Formel I eines oder mehrerer der Ansprüche 1 bis 5 oder deren Mischungen gemäß Anspruch 6 zum Färben und Bedrucken von hydrophoben Fasermaterialien.

## Claims

1. Azo dyes of the general formula I

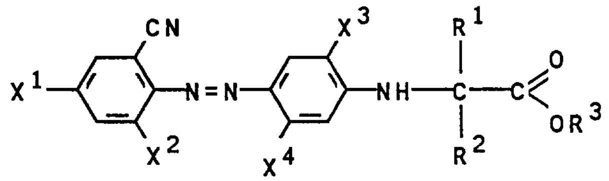

(I)

where

$X^1$ is hydrogen; ($C_1$ to $C_6$)alkyl; cyclopentyl; Cyclohexyl; fluorine; chlorine; bromine; trifluormethyl or ($C_1$ to $C_4$)alkoxy which may be substituted by ($C_1$ to $C_4$)alkoxy and/or hydroxyl,

$X^2$ is cyano;

$X^3$ is hydrogen;

$X^4$ is $NHCOR^4$;

$R^1$ is hydrogen or ($C_1$ to $C_6$)alkyl;

$R^2$ is ($C_1$ to $C_6$)alkyl;

$R^3$ is ($C_1$ to $C_8$)alkyl; ($C_1$ to $C_8$)alkyl which may be interrupted by one or more oxygen atoms and/or is monosubstituted or polysubstituted by chlorine, bromine, cyano, hydroxyl, phenyl, phenoxy, ($C_1$ to $C_6$)-alkoxy, ($C_3$ to $C_5$)alkenyloxy, cyclopentyloxy, cyclohexyloxy, tetrahydrofurfuryl, tetrahydrofurfuryloxy, ($C_1$ to $C_4$)alkyltetrafurfuryl, tetrahydropyronyl, ($C_1$ to $C_4$)alkyl-tetrahydropyronyl, ($C_1$ to $C_4$)-alkoxycarbonyl, ($C_1$ to $C_4$)alkoxycarbonyloxy, ($C_1$ to $C_4$)alkylcarbonyloxy, ($C_3$ to $C_5$)alkenyloxycarbonyl, ($C_3$ to $C_5$)alkenyloxycarbonyloxy, cyclopentyloxycarbonyl, cyclohexyloxycarbonyl, phenoxycarbonyl, phenoxycarbonyloxy and/or phenylcarbonyloxy, of which phenoxycarbonyl, phenoxycarbonyloxy and phenylcarbonyloxy may each be monosubstituted or polysubstituted in turn by ($C_1$ to $C_4$)alkyl, chlorine, bromine and/or cyano; or is ($C_3$ to $C_5$)alkenyl; cyclopentyl; cyclohexyl; tetrahydrofurfuryl; benzyl; benzyl which is monosubstituted or polysubstituted by chlorine, bromine, nitro, cyano, ($C_1$ to $C_4$)alkyl and/or ($C_1$ to $C_4$)alkoxy; phenyl or ($C_5$ to $C_{16}$)alkyl which is interrupted by 2 or 3 oxygen atoms,

$R^4$ is ($C_1$ to $C_8$)alkyl which may be monosubstituted or polysubstituted by fluorine, chlorine, bromine, hydroxyl or ($C_1$ to $C_4$)alkoxy; phenyl; ($C_1$ to $C_4$)alkoxy or phenoxy.

2. Azo dyes according to Claim 1, characterized in that $X^1$ is hydrogen, ($C_2$ or $C_3$)alkyl, ($C_2$ to $C_4$)alkoxy, fluorine, chlorine, bromine, methyl, methoxy or trifluoromethyl.

3. Azo dyes according to Claim 1 and/or 2, characterized in that $R^4$ is ($C_1$ to $C_6$)alkyl, in particular ($C_1$ to $C_4$)alkyl, and $R^5$ is ($C_1$ to $C_4$)alkyl.

4. Azo dyes according to one or more of Claims 1 to 3, characterized in that $R^1$ is ($C_1$ to $C_4$)alkyl, in particular ($C_1$ to $C_3$)alkyl, and/or $R^2$ is ($C_1$-$C_4$)alkyl, in particular ($C_1$ or $C_2$)alkyl.

5. Azo dyes according to one or more of Claims 1 to 4, characterized in that $R^3$ is ($C_1$ to $C_8$)alkyl, ($C_3$ to $C_5$)-alkenyl, phenyl-substituted ($C_1$ to $C_3$)alkyl, cyano- or chlorine-substituted ($C_2$ or $C_3$)alkyl, or ($C_1$ to $C_4$)-alkoxy- or ($C_3$ to $C_5$)alkenyloxy- or phenoxy-substituted ($C_2$ to $C_4$)alkyl.

6. Dye mixtures, characterized in that they contain one or more azo dyes of one or more of Claims 1 to 5.

7. Process for preparing azo dyes of the formula I of Claim 1, characterized in that an amine of the formula V

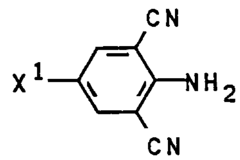

(V)

is diazotized and coupled onto a coupling component of the formula IV

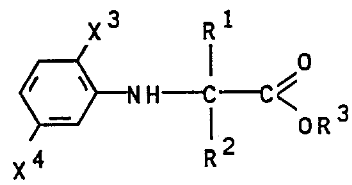

(IV)

where $X^1$, $X^4$, $X^3$, $R^1$, $R^2$ and $R^3$ are each as defined in Claim 1, or preferably an azo dye of the formula II

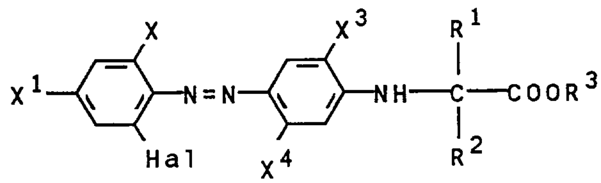

(II)

where $X^1$, $X^4$, $X^3$, $R^1$, $R^2$ and $R^3$ are each as defined in Claim 1, X is cyano or Hal and Hal is halogen, in particular chlorine or bromine, is subjected in a conventional manner to a nucleophilic displacement reaction with $CN^{\ominus}$ as nucleophile.

**8.** Use of the azo dyes of the formula I of one or more of Claims 1 to 5 or of mixtures thereof according to Claim 6, for dyeing and printing hydrophobic fibre materials.

## Revendications

**1.** Colorants azoïques de formule générale I ci-dessous

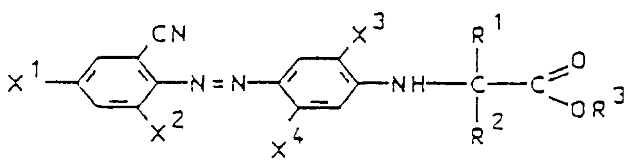

(I)

dans laquelle

- $X^1$ désigne l'hydrogène, un alkyle en $C_1$ à $C_6$, un cyclopentyle ou un cyclohexyle, le fluor, le chlore, le brome, le groupe trifluorométhyle ou un alcoxy en $C_1$ à $C_4$ pouvant avoir comme substituants un alcoxy en $C_1$ à $C_4$ et/ou un hydroxyle ;
- $X^2$ un groupe cyano ;
- $X^3$ l'hydrogène ;
- $X^4$ un groupe $NHCOR^4$;
- $R^1$ l'hydrogène ou un alkyle en $C_1$ à $C_6$,
- $R^2$ un alkyle en $C_1$ à $C_6$ ; et
- $R^3$ un alkyle en $C_1$ à $C_8$ pouvant être interrompu par un ou plusieurs atomes d'oxygène et/ou qui'a un ou plusieurs substituants pris parmi les suivants : chlore, brome, cyano, hydroxyle, phényle, phénoxy, ($C_1$ à $C_8$)alcoxy, ($C_3$ à $C_5$)alcényloxy, cyclopentyloxy, cyclohexyloxy,

tétrahydrofurfuryle, tétrahydrofurruryloxy, ($C_1$ à $C_4$)alxyltétrahydrofurfuryle, tétrahydropyronyle, ($C_1$ à $C_4$) - alkyl-tétrahydropyronyle, ($C_1$ à $C_4$)alcoxy-carbonyle, ($C_1$ à $C_4$)alcoxycarbonyle, ($C_1$ à $C_4$)alkylcarbonyloxy, ($C_3$ à $C_5$)alcényloxy-carbonyle, ($C_3$ à $C_5$)alcényloxy-carbonyle, cyclopentyloxy-carbonyle, cyclohexyloxy-carbonyle, phénoxy-carbonyle, phénoxy-carbonyloxy et/ou phényl-carbonyloxy, les groupes phénoxycarbonyle, phénoxy-carbonyloxy et phényl-carbonyloxy pouvant avoir eux-mêmes chacun comme substituants un ou plusieurs alkyles en $C_1$ à $C_4$, atomes de chlore ou de brome et/ou groupes cyano ; ($C_3$ à $C_5$)alcényles, cyclopencyle, cyclohexyle, tétrahydrofurfuryle, benzyle ou benzyle avec un ou plusieurs substituants pris parmi le chlore, le brome, les groupes nitro et cyano et des alkyles et/ou alcoxy en $C_1$ à $C_4$ ; phényle ; et ($C_5$ à $C_{16}$)alkyle interrompu par 2 ou 3 atomes d'oxygène ;

$R^4$ étant un alkyle en $C_1$ à $C_8$ pouvant avoir un ou plusieurs substituants pris parmi le fluor, le chlore, le brome, le groupe hydroxy et des alcoxy en $C_1$ à $C_4$ ; ou bien un phényle, un alcoxy en $C_1$ à $C_4$ ou un phénoxy.

**2.** Colorants azoïques selon la revendication 1, caractérisés en ce que $X^1$ est l'hydrogène, un alkyle en $C_2$ ou $C_3$, un alcoxy en $C_2$ à $C_4$ ou bien le fluor, le chlore, le brome ou un groupe méthyle, méthoxy ou trifluorométhyle.

**3.** Colorants azoïques selon la revendication 1 et/ou 2, caractérisés en ce que $R^4$ est un alkyle en $C_1$ à $C_6$, en particulier en $C_1$ à $C_4$, et $R_5$ un alkyle en $C_1$ à $C_4$.

**4.** Colorants azoïques selon une ou plusieurs des revendications 1 à 3, caractérisés en ce que $R^1$ est un alkyle en $C_1$ à $C_4$, en particulier en $C_1$ à $C_3$, et/ou $R^2$ est un alkyle en $C_1$ à $C_4$, en particulier en $C_1$ ou $C_2$.

**5.** Colorants azoïques selon une ou plusieurs des revendications 1 à 4, caractérisés en ce que $R^3$ est un alkyle en $C_1$ à $C_8$, un alcényle en $C_3$ à $C_5$, un phénylalkyle à alkyle en $C_1$ à $C_3$, un cyanoalkyle ou un chloroalkyle en $C_2$ ou $C_3$ ou encore un alkyle en $C_2$ à $C_4$ substitué par un alcoxy en $C_1$ à $C_4$, un alcényloxy en $C_3$ à $C_5$ ou un phénoxy.

**6.** Mélanges de colorants caractérisés en ce qu'ils comprennent deux colorants azoïques ou plus d'une ou de plusieurs des revendications 1 à 5.

**7.** Procédé de préparation de colorants azoïques de formule I selon la revendication 1, procédé caractérisé en ce que l'on diazote une amine de formule V

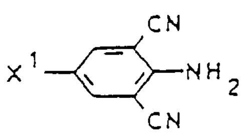

(V)

et on copule le composé de diazonium avec une composante de copulation de formule IV

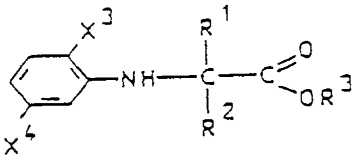

(IV)

les divers symboles ayant les significations indiquées à la revendication 1,
ou bien, et de préférence, en ce que l'on soumet de manière connue à une réaction d'échange nucléopnile, avec l'ion $CN^-$ comme agent nucléophile, un colorant azoïque de formule II

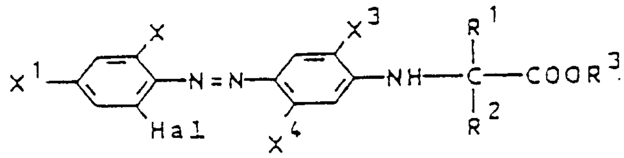 (II)

X désignant le groupe cyano ou un halogène et Hal un atome d'halogène, en particulier de chlore ou de brome.

**8.** L'emploi de colorants azoïques de formule I selon une ou plusieurs des revendications 1 à 5, ou de mélanges de plusieurs de ces colorants selon la revendication 6, pour teindre et imprimer des matières fibrueses hydrophobes.